# EUROPÄISCHE PATENTANMELDUNG

(11) **EP 4 603 420 A1**
(43) Veröffentlichungstag der Anmeldung: **20.08.2025**
(21) Anmeldenummer: 25157548.6
(22) Anmeldetag: 13.02.2025
(51) Int. Cl.: B65G 11/02, B65G 47/30, B65G 47/68

(54) **VORRICHTUNG ZUR HANDHABUNG EINES STÜCKGUTS UND VERFAHREN ZUR HANDHABUNG EINES STÜCKGUTS**

(30) Priorität: 15.02.2024 DE 102024104189
(71) Anmelder: Körber Supply Chain Logistics GmbH, 78467 Konstanz (DE)
(72) Erfinder: Hempel, Erik, 78462 Konstanz (DE); Enz, Raphael, 8266 Steckborn (CH)
(74) Vertreter: Müller Schupfner & Partner Patent- und Rechtsanwaltspartnerschaft mbB (Muc)

(57) **Zusammenfassung**

Es wird eine Vorrichtung (1) zur Handhabung eines Stückguts (2) bereitgestellt. Die Vorrichtung (1) umfasst eine Auflagefläche (3), die so ausgestaltet ist, dass zumindest ein Stückgut (2) darauf aufliegen kann, eine Handhabungsvorrichtung (4), die dazu ausgestaltet ist, ein Stückguts (2), welches auf der Auflagefläche (3) aufliegt, so zu handhaben, dass das Stückgut (2) von der Auflagefläche (3) entfernt wird, und eine Zufuhrförderereinrichtung, die dazu ausgestaltet ist, zumindest ein Stückgut der Auflagefläche (3) zuzufördern, wobei die Zufuhrfördereinrichtung als ein Kaskadenförderer (11) ausgestaltet ist. Ferner wird eine Handhabungssystems (10) zum Handhaben von Stückgütern (2) und ein Verfahren zur Handhabung eines Stückguts (2) bereitgestellt.

## Beschreibung

Die vorliegende Erfindung betrifft eine Vorrichtung zur Handhabung eines Stückguts, ein Handhabungssystem zum Handhaben von Stückgütern und ein Verfahren zur Handhabung eines Stückguts.

Im Stand der Technik ist es üblich, dass eine Masse von einem zu handhabenden Stückgut, welches beispielsweise erstmalig gehandhabt wird, abgeschätzt wird. Insbesondere bei einer hohen Durchsatzrate von Stückgütern ist es schwer, eine Masse jedes einzelnen Stückguts genau zu bestimmen. Dadurch kann eine Handhabung des Stückguts ineffizient sein oder sogar fehlschlagen. Beispielsweise wird anhand der Abmessungen eines Stückguts auf eine Masse des Stückguts geschlossen. Dies liefert jedoch oft falsche Ergebnisse, da sehr kleine Stückgüter eine sehr hohe Masse aufweisen können oder anders herum. Bei einer Handhabung des Stückguts wird dann von einer falschen Masse des Stückguts ausgegangen, was wiederum eine falsche Handhabung bedingt.

Daher ist es eine Aufgabe der vorliegenden Erfindung, eine Handhabung eines Stückguts zu verbessern.

Die Aufgabe wird mit einer Vorrichtung zur Handhabung eines Stückguts mit den Merkmalen des Anspruchs 1, sowie mit einem Verfahren zur Handhabung eines Stückguts mit den Merkmalen des Anspruchs 15 gelöst.

Gemäß einem Aspekt der vorliegenden Erfindung wird eine Vorrichtung zur Handhabung eines Stückguts. Die Vorrichtung kann eine Auflagefläche umfassen, die so ausgestaltet ist, dass zumindest ein Stückgut darauf aufliegen kann. Die Vorrichtung kann eine Handhabungsvorrichtung umfassen, die dazu ausgestaltet ist, ein Stückgut, welches auf der Auflagefläche aufliegt, so zu handhaben, dass das Stückgut von der Auflagefläche entfernt wird. Die Vorrichtung kann eine Zufuhrförderereinrichtung umfassen, die dazu ausgestaltet ist, zumindest ein Stückgut der Auflagefläche zuzufördern. Die Zufuhrfördereinrichtung kann als ein Kaskadenförderer ausgestaltet sein. Vorzugsweise ist die Zufuhrfördereinrichtung als ein Kaskadenförderer ausgestaltet. Der Kaskadenförderer kann zumindest zwei unterschiedliche Ebenen aufweisen, auf denen jeweils ein Förderelement vorgesehen ist. Jedes Förderelement kann dazu ausgestaltet sein, Stückgüter zu fördern. Durch die unterschiedlichen Ebenen kann sichergestellt sein, dass keine Stückgüter mehr aufeinander aufliegen. Somit kann ein 2D Strom der Auflagefläche zugefördert werden. Ferner können Stückguter durch den Kaskadenförderer so separiert werden, dass sie auch in einem 2D-Strom nicht mehr aneinander angrenzen. Damit kann eine spätere Handhabung der Stückguter vereinfacht sein. Die Auflagefläche kann eine Oberfläche sein, die dazu ausgestaltet ist, dass ein Stückgut darauf zu liegen kommen kann. Die Auflageoberfläche kann beispielsweise die Oberfläche eines Griffs sein. Ferner kann die Auflagefläche auch die Oberfläche einer Transportvorrichtung sein, auf der das Stückgut aufliegen kann. Die Auflageoberfläche kann ein Kontaktfläche sein, an der das zumindest eine Stückgut die Auflagefläche kontaktiert. Das Stückgut kann ein Poststück wie beispielsweise ein Paket, Päckchen, Transportrolle, Transporttasche, Small, Karton, oder dergleichen sein. Vorzugsweise ist die Auflagefläche so ausgestaltet, dass eine Vielzahl von Stückgütern darauf aufliegen kann. Vorzugsweise kann die Vielzahl von Stückgütern ungeordnet auf der Auflagefläche aufliegen. Die Handhabungsvorrichtung kann dazu ausgestaltet sein, ein Stückgut zu handhaben, um es an einen anderen Ort zu bewegen. Mit anderen Worten kann die Handhabungsvorrichtung dazu ausgestaltet sein, das Stückgut (z.B. das Zielstückgut) physisch zu bewegen. Dazu kann die Handhabungsvorrichtung das Stückgut aufnehmen, greifen und/oder ansaugen, um es zu handhaben. Ferner kann die Handhabungsvorrichtung das Stückgut auch ziehen oder schieben, um es zu handhaben. Insbesondere kann die Handhabungsvorrichtung dazu ausgestaltet sein, dass Stückgut von der Auflagefläche zu entfernen. Mit anderen Worten kann die Handhabungsvorrichtung einen ersten Zustand, bei dem das Stückgut auf der Auflagefläche aufliegt, in einen zweiten Zustand überführen, bei dem des Zielstückgut nicht mehr auf der Auflagefläche aufliegt. Damit kann die Handhabungsvorrichtung des Zielstückgut von der Auflagefläche entfernen.

Die zumindest zwei Ebenen können miteinander durch eine schräge und rutschenartige Verbindung verbunden sein. Somit kann ein Kaskadenförderer als eine Art Puffersystem wirken. Ferner kann somit ein 3D Strom sicher aufgelöst werden und in einen 2D Strom umgewandelt werden. Die rutschenartige Verbindung kann ein passives Element sein, welches kein Fördermechanismus oder dergleichen aufweist. Die Verbindungen können relativ zu der Horizontalen schräg angeordnet sein. Durch Antreiben des Förderelements auf der jeweiligen Ebene des Kaskadenförderers können Stückgüter weiter in Transportrichtung gefördert werden, sodass diese die Verbindung zur nächsten Ebene hinunterrutschen. Die Förderelement können parallel zu der Horizontalen angeordnet sein. Somit können Stückgüter, die von einer stromaufwärts angeordneten Verbindung auf das Förderelement hinunterrutschen gestoppt werden und nur durch aktives Antreiben des Förderelements weitertransportiert werden. Der Kaskadenfördererförderer kann direkt oder indirekt an der Auflagefläche angeschlossen sein. Ferner kann der Kaskadenförderer seitlich (d.h. parallel zur Förderrichtung) Leitwände aufweisen, sodass verhindert ist, dass Stückgüter von dem Kaskadenförderer seitlich herunterfallen. Dadurch können Stückgüter in einem 3D-Strom, beispielsweise als 3D Bulk, dem Kaskadenförderer zugeführt werden. Selbst bei einer Zufuhr von einer Vielzahl von Stückgütern, kann der Kaskadenförderer dazu ausgestaltet sein, zumindest einen 2D Strom zu erzeugen. Mit anderen Worten kann er durch das abwechselnde Fördern der Stückgüter mit dem Förderelement und das Rutschen der Stückgüter auf der Verbindung dafür sorgen, dass kein Stückgut mehr auf einem anderen Aufliegt.

Vorzugsweise ist zumindest eines der Förderelemente dazu ausgestaltet, intermittierend angetrieben zu werden. Mit anderen Worten kann zumindest eines der Förderelemente nur zweitweise in Betrieb sein und Stückgüter fördern. Damit kann die Pufferwirkung noch verstärkt werden. Mit anderen Worten kann eine Vielzahl von Stückgütern auf dem Kaskadenförderer aufliegen. Durch kurzzeitiges Antreiben zumindest eines Förderelements können einzelnen Stückgüter gefördert werden und durch die nächste stromabwärtsliegende Verbindung von den anderen Stückgütern separiert werden. Ferner können zumindest zwei Förderelemente zu unterschiedlichen Zeiten betrieben werden. Mit anderen Worten kann somit vermieden werden, dass zwei Förderelemente gleichzeitig betrieben werden. Damit kann sichergestellt sein, dass Stückgüter besser voneinander separiert werden.

Vorzugsweise weist die Vorrichtung eine Zufuhrförderereinrichtung auf, die dazu ausgestaltet ist, zumindest ein Stückgut der Auflagefläche zuzufördern. Mit anderen Worten kann stromaufwärts der Auflagefläche eine Zufördereinrichtung angeordnet sein, die Stückgüter der Auflagefläche zufördern kann. Die Zufuhrfördereinrichtung (Kaskadenförderer) kann dazu ausgestaltet sein, Stückgüter zwischenzupuffern, solange eine Messung auf der Auflagefläche durchgeführt wird. Mit anderen Worten kann die Vorrichtung in einem kontinuierlichen Paketfluss angeordnet sein, und durch die Zufuhrfördereinrichtung dennoch sichergestellt sein, dass Stückgüter einzeln der Auflagefläche zugeführt werden. Die Zufuhrfördereinrichtung kann beispielsweise ein Förderband, ein Rollenförderer, Bandförderer oder dergleichen umfassen.

Vorzugsweise kann die Zufuhrfördereinrichtung dazu ausgestaltet sein, einen 2D-Strom oder einen 1D-Strom zu erzeugen. Mit anderen Worten kann die Zufuhrfördereinrichtung eine Reduzierung der räumlichen Dimensionen der Stückgüter bereitstellen. Bei einem 3D-Strom sind Stückgüter in einer dreidimensionalen Lagerung angeordnet. Bei einem 2D-Strom ist eine Lager von Stückgüter auf eine einzige Ebene reduziert, oft in einer geordneten Reihenfolge für weitere Verarbeitung, z. B. für das Scannen, Sortieren oder Laden in Fahrzeuge. Somit kann die Zufuhrfördereinrichtung dazu ausgestaltet sein, einen 3D-Strom zu entstapeln und eine einheitliche Prozesshöhe für die Stückgüter realisieren. Zusammengefasst kann die Zufuhrfördereinrichtung eine Umwandlung eines 3D-Stroms in einen 2D-Strom bereitstellen, indem die Höhendimension des 3D Stroms reduziert wird. Ein 1D Strom liegt dann vor, wenn Stückguter nur hintereinander gefördert werden (d.h. nicht nebeneinander). Dies kann vorkommen, wenn Stückgüter in einer bestimmten Art und Weise fallen oder weniger Stückgüter gefördert werden.

Vorzugweise umfasst die Vorrichtung eine Messvorrichtung, die dazu ausgestaltet ist, eine Masse zumindest eines Teils der Auflagefläche zu erfassen, auf der das zumindest eine Stückgut aufliegt und einen Massemesswert auszugeben, und eine Steuereinheit, die dazu ausgestaltet ist, basierend auf einem ersten Massemesswert und/oder einem zweiten Massemesswert die Masse des Stückgut zu bestimmen, wobei der erste Massemesswert die Masse zumindest eines Teils der Auflagefläche und des Stückguts umfasst, und wobei der zweite Massemesswert die Masse zumindest eines Teils der Auflagefläche ohne die Masse des Stückguts umfasst.

Gegenüber dem bekannten Stand der Technik liefert die Vorrichtung gemäß einem Aspekt der vorliegenden Erfindung den Vorteil, dass eine Masse eines Stückguts ohne Kalibrierung der Vorrichtung bestimmt werden kann. Dadurch kann die die Vorrichtung zur Bestimmung einer Masse des Zielstückguts (d.h. eines Stückguts aus der Vielzahl der Stückgüter) besonders einfach implementiert werden. Ferner kann die Vorrichtung die Masse des Zielstückguts einer nachgelagerten Vorrichtung oder System zuführen. Dadurch kann eine nachgelagerte Handhabung des Stückguts verbessert sein. Mit anderen Worten kann eine nachgelagerte Handhabung individuell auf die Masse des Zielstückguts angepasst sein. Ferner kann die Handhabungsvorrichtung basierend auf der bestimmten Masse des Zielstückguts gesteuert werden. So kann beispielsweise bei besonders schweren Stückgütern die Dynamik der Handhabung reduziert werden und so das Risiko, das Zielstückgut bei der Handhabung zu verlieren oder zu beschädigen, verringert werden. Bei besonders leichten Stückgütern hingegen kann die Dynamik erhöht werden, was wiederum den Durchsatz der Vorrichtung steigert. Im Stand der Technik ist es lediglich bekannt, die Handhabungsvorrichtung basierend auf der geometrischen Abmessung des Stückguts zu steuern. Dabei wird angenommen, dass ein Gewicht oder eine Masse des Stückguts mit seiner Größe korreliert. Dies ist jedoch selten korrekt. So kann es Stückgüter mit geringen geometrischen Abmessungen geben, die ein besonders hohes Gewicht aufweisen. Daher ist die Vorrichtung auch für ein inhomogenes Stückgutspektrum geeignet und kann Stückgüter daraus problemlos handhaben.

Die Vorrichtung zur Bestimmung einer Masse kann eine Vorrichtung sein, die Teil eines Abfertigungssystems für Stückgüter ist. Beispielsweise kann die Vorrichtung in einem Sortierzentrum für Stückgüter, insbesondere Poststücke, einsetzbar sein. Die Masse kann ein Gewicht eines Stückguts bezeichnen. Das Zielstückgut kann dasjenige Stückgut sein, welches von der Handhabungsvorrichtung zu handhaben ist. Mit anderen Worten können eine Vielzahl von Stückgütern vorliegen, aus denen genau eines als nächstes von der Handhabungsvorrichtung gehandhabt werden soll. Dieses eine Stückgut kann als Zielstückgut bezeichnet werden. Die Messvorrichtung kann dazu ausgestaltet sein, eine Masse zumindest eines Teils der Auflagefläche zu erfassen, unabhängig davon, wie viele Stückgüter auf der Auflagefläche aufliegen. So kann die Messvorrichtung eine Masse zumindest eines Teils der Auflagefläche erfassen, wenn beispielsweise 20 Stückgüter darauf aufliegen. Mit anderen Worten kann die Messvorrichtung einen Massemesswert ausgeben, der indikativ für eine Masse zumindest eines Teils der Auflagefläche sowie der darauf aufliegenden Stückgüter ist. Dabei ist es nicht notwendig, dass die Messvorrichtung die Masse der gesamten Auflagefläche erfassen kann. Vielmehr kann die Messvorrichtung lediglich die Masse eines Teils der Auflagefläche bestimmen. Beispielsweise kann der Teil der Auflagefläche, deren Masse durch die Messvorrichtung bestimmt werden kann, der Teil der Auflagefläche sein, auf dem Stückgüter zum Liegen kommen können. Mit anderen Worten ist es nicht unbedingt notwendig, einen Rahmen oder andere Teile der Auflagefläche zu wiegen, auf denen kein Stückgut zum Liegen kommen kann. Die Messvorrichtung kann dann dazu ausgestaltet sein, einen Massemesswert auszugeben. Der Massemesswert kann ein der Ausgabeinformation sein, die indikativ für eine erfasste Masse ist. Die Steuereinheit kann eine computerähnliche Vorrichtung sein, die dazu ausgestaltet ist, Information aufzunehmen (Eingangsinformationen) die Informationen zu verarbeiten und Informationen auszugeben (Ausgabeinformationen). Die Eingangsinformationen, die der Steuereinheit zugeführt werden, können den Massemesswert, welcher von der Messvorrichtung bestimmt wird, umfassen. Die Steuereinheit kann eine Vielzahl von Massemesswerten aufnehmen. Die Ausgabeinformationen, die von der Steuereinheit ausgegeben werden, können Steuerbefehle sein, um eine Vorrichtung oder ein Element zu steuern. So kann die Steuereinheit beispielsweise einen ersten Massemesswert und ein zweiten Massemesswert, welche jeweils von der Messvorrichtung bestimmt werden können, aufnehmen. Der erste Massemesswert und der zweite Massemesswert können sich dahingehend unterscheiden, dass sie zu unterschiedlichen Zeitpunkten durch die Messvorrichtung gemessen worden sind. Beispielsweise kann der erste Masseesswert gemessen werden, wenn das Zielstückguts auf der Auflagefläche aufliegt. Der zweite Massemesswert kann demgegenüber dann gemessen werden, wenn die Handhabungsvorrichtung das Zielstückgut von der Auflagefläche entfernt hat. Gemessen kann hierbei mit einem Erfassen gleichgesetzt sein. Dabei können bei dem ersten Massemesswert und dem zweiten Massemesswert eine Vielzahl von anderen Massen, beispielsweise andere Stückgüter, umfasst sein. Der erste Massemesswert kann sich von dem zweiten Massemesswert unterscheiden. Vorzugsweise ändert sich zwischen dem ersten Massemesswert und dem zweiten Massemesswert lediglich das Vorhandensein des Zielstückguts. Basierend auf dem ersten Massemesswert und dem zweiten Massemesswert kann die Steuereinheit dann die Masse des Zielstückguts bestimmen. Genauer gesagt kann die Steuereinheit dazu ausgestaltet sein, den zweiten Massemesswert, d. h. der Massemesswert der zeitlich später erfasst wird, von dem ersten Massemesswert abzuziehen. Durch diesen Differenzbetrag kann auf die Masse des Zielstückguts geschlossen werden. Dadurch ist es nicht notwendig, die Messvorrichtung zu kalibrieren, da lediglich die Differenz zwischen dem ersten Massemesswert und dem zweiten Massemesswert verwendet wird, um die Masse des Zielstückguts zu bestimmen. Dadurch kann die Bestimmung der Masse robust sein und die Vorrichtung kann einfach in bestehende Systeme integriert werden. Durch die Kenntnis der genauen Masse des Zielstückguts kann die Handhabung des Zielstückguts durch die Handhabungsvorrichtung angepasst werden. Ferner können durch Kenntnis der Masse des Zielstückguts nachgeordnete Systeme das Zielstückgutsindividuelle handhaben. Dadurch kann die gesamte Effizienz und Zuverlässigkeit eines übergeordneten Handhabungssystems verbessert werden. Das Zielstückgut kann auch zwei oder mehr Stückgüter umfassen, die beispielsweise zusammen gegriffen werden.

Die Masse des Zielstückguts kann auch nur durch einen einzelnen Messwert bestimmt werden, wenn beispielsweise nur ein Stückgut, nämlich das Zielstückgut, auf der Auflagefläche aufliegt. Damit kann ein Massemesswert bestimmt werden, der die Masse des Zielstückguts (d.h. als einziges Stückgut, das auf der Auflagefläche aufliegt) und der Auflagefläche oder zumindest eines Teils der Auflagefläche, umfasst. In diesem Fall muss die Masse der der Auflagefläche oder zumindest eines Teils der Auflagefläche bekannt sein. So kann auf die Masse des Zielstückguts zurückgeschlossen werden. Zusätzlich oder alternativ kann der zweite Massemesswert auch indikativ für eine Masse der Auflagefläche oder zumindest eines Teils der Auflagefläche sein. Die Information, ob das Zielstückgut als einziges Stückgut auf der Auflagefläche aufliegt, kann beispielsweise von einer Sensoreinrichtung oder einer Messvorrichtung erlangt werden. Die Sensoreinrichtung kann beispielsweise ein Kamerasystem sein, welches die Auflagefläche erfassen kann. Vorzugsweise ist die Sensoreinrichtung dieselbe Sensoreinrichtung, die auch verwendet wird, um die Handhabungsvorrichtung zu steuern. Dadurch kann die Bestimmung der Masse des Zielstückguts Situationsangepasst erfolgen und in der Effizienz gesteigert werden. Mit anderen Worten kann eine Erfassung der Masse des Zielstückguts besonders schnell erfolgen, wenn nur das Zielstückgut auf der Auflagefläche aufliegt.

Vorzugsweise ist die Auflagefläche eine Transportvorrichtung, die dazu ausgestaltet ist, das zumindest eine Stückgut in einer Transportrichtung zu transportieren. Die Auflagefläche kann also eine Oberfläche einer Transportvorrichtung sein. Die Transportvorrichtung kann ein Förderband, Rollenförderer, Bandförderer oder dergleichen sein, der dazu ausgestaltet ist, das Stückgut zu transportieren. Die Transportrichtung kann von einer stromaufwärtigen Seite der Transportvorrichtung zu einer stromabwärtigen Seite der Transportvorrichtung verlaufen. Somit kann die Vorrichtung auch an bestehenden Transportvorrichtungen angeordnet sein und auch dort eine Masse eines Zielstückguts bestimmen.

Vorzugsweise ist die Transportvorrichtung dazu ausgestaltet, periodisch angetrieben zu werden. Die Transportvorrichtung kann einen Abschnitt aufweisen, der durch die Messvorrichtung analysiert werden kann. Mit anderen Worten kann die Transportvorrichtung einen Teil aufweisen, der durch die Messvorrichtung gewogen wird mit allen Stückgütern, die zu dem Messzeitpunkt darauf befindlich sind. Um zwischen der Aufnahme des ersten Massemesswerts und des zweiten Massemesswerts kein neues Stückgut auf den gemessenen Bereich der Transportvorrichtung zuzuführen, kann die Transportvorrichtung periodisch oder schrittweise angetrieben werden. Mit anderen Worten kann die Transportvorrichtung zwischen den Messzeitpunkten, an denen der erste Massemesswert zweite Massemesswert aufgenommen werden, nicht angetrieben werden. Dadurch kann sichergestellt sein, dass keine weiteren Stückgüter auf den Bereich der Transportvorrichtung befördert werden, der durch die Messvorrichtung gemessen bzw. gewogen wird. Dadurch kann die Qualität der Ergebnisse verbessert werden. Ferner können Fehlmessungen vermieden werden. Die Zufuhrfördereinrichtung kann beispielsweise in Abhängigkeit der Messvorrichtung betrieben werden. Genauer gesagt kann die Zufuhrfördereinrichtung angetrieben werden, wenn gerade keine Messung durchgeführt wird. Sobald eine Messung durchgeführt wird, kann die Zufuhrfördereinrichtung kurze Zeit stoppen, um zu verhindern, dass weitere Stückgüter der Auflagefläche zugeführt werden. Somit kann sichergestellt werden, dass Stückgüter während eines Messvorgangs auf die Auflagefläche aufgebracht werden.

Vorzugsweise ist die Steuereinheit dazu ausgestaltet, die Handhabungsvorrichtung basierend auf der Masse des Zielstückguts zu steuern. Mit anderen Worten kann die Handhabungsvorrichtung abhängig von der Masse des Zielstückguts gesteuert werden. Durch die Bestimmung der Masse des Zielstückguts, sobald das Zielstückguts von der Auflagefläche angehoben oder entfernt ist, kann sehr schnell eine Information über die Masse des Zielstückguts bereitgestellt werden. Basierend darauf kann beispielsweise eine Handhabungsgeschwindigkeit der Handhabungsvorrichtung angepasst werden. So kann beispielsweise bei besonders schweren Stückgütern die Handhabungsgeschwindigkeit bzw. die Handhabungsbeschleunigung (d.h. die Dynamik) verringert werden, um ein Abfallen oder eine Beschädigung des Stückguts zu vermeiden. Bei besonders leichten Stückgütern kann demgegenüber eine Handhabungsgeschwindigkeit und/oder eine Handhabungsbeschleunigung erhöht werden, um den Durchsatz von gehandhabten Stückgütern zu erhöhen. Dadurch kann die Effizienz des Gesamtsystems gesteigert sein.

Vorzugsweise ist die Steuereinheit dazu ausgestaltet, die Masse des Zielstückguts den Stückgutinformation zuzuordnen und vorzugsweise abzuspeichern. Jedes Stückgut, welches in einer übergeordneten Handhabungsvorrichtung zum Handhaben von Stückgütern gehandhabt wird, weist Stückgutinformationen auf. Die Stückgutinformationen können indikativ für ein Ziel des Stückguts sein. Beispielsweise ist bei Postsendungen die Adresse in den Stückgutinformationen umfasst. Die Steuereinheit kann also die mit der Vorrichtung bestimmte Masse den Stückgutinformationen zuordnen. Damit kann die Masse bei einer späteren Handhabung in einem nachfolgenden Prozess zur Verfügung stehen, und die Handhabung kann zielgerichtet und angepasst durchgeführt werden. Vorzugsweise kann die Masse des Zielstückguts auch dauerhaft in den Stückgutinformationen gespeichert werden. Folglich kann die Steuereinheit dazu ausgestaltet sein, mit einer Datenbank zu kommunizieren, um dem jeweiligen Stückgut eine Masse zuzuordnen. Die Vorrichtung kann dazu ferner ein Erkennungssystem umfassen, welches dazu ausgestaltet sein kann, das Stückgut zu identifizieren. Daher kann ein bestehender Datensatz (z.B. Stückgutinformationen) einem Stückgut, zugeordnet werden und die bestimmte Masse, die durch die Vorrichtung bestimmt ist, ebenfalls zugeordnet werden. Zusätzlich oder alternativ kann die Steuereinheit auch Information darüber erlangen, welches Stückgut gerade durch die Handhabungsvorrichtung gehandhabt wird oder wurde. Dadurch ist keine Identifizierung des gehandhabten Stückguts in der Vorrichtung selbst notwendig.

Vorzugsweise ist die Messvorrichtung eine in die Auflagefläche oder an der Auflagefläche integrierte Waage. Mit anderen Worten kann die Auflageoberfläche, selbst eine Waage sein. Ferner ist es denkbar, dass eine Waage an der Auflagefläche angeordnet ist, sodass zumindest ein Abschnitt der Auflagefläche gebogen werden kann. Hierbei ist denkbar, dass die Waage- oder Wägezelle in Kontakt mit der Auflagefläche ist, um eine Masse der Auflagefläche oder zumindest eines Teils der Auflagefläche und der darauf befindlichen Stückgüter aufzunehmen. Vorzugsweise ist die Messvorrichtung an einem Gestell, welches die Auflagefläche trägt, vorgesehen. In diesem Fall kann die Messvorrichtung als zumindest eine Messdose ausgestaltet sein, die an einem Gestell angeordnet sein kann. Das Gestell kann beispielsweise eine Rahmenstruktur sein, die die Auflagefläche trägt. Die Messvorrichtung kann an Verbindungen des Gestells zwischen Untergrund und Auflagefläche angeordnet sein. Mit anderen Worten kann die Messvorrichtung eine Vielzahl von einzelnen Messsensoren aufweisen. Die einzelne Messsensoren können jeweils Ergebnisse liefern, die dann zusammengefasst werden, um die Masse der Auflagefläche oder zumindest ein Teil der Auflagefläche mit den darauf befindlichen Stückgütern zu bestimmen. Beispielsweise kann das Gestell ein Gestell mit vier Füßen sein, wobei an jedem Fuß ein Messsensor (z.B. eine Messdose und/oder ein Dehnungsmessstreifen) der Messvorrichtung angeordnet ist. Die Messvorrichtung kann beispielsweise Dehnungsmessstreifen umfassen, die an dem Gestell angeordnet sind.

Vorzugsweise ist die Messvorrichtung dazu ausgestaltet, basierend auf einer Betriebsinformation der Vorrichtung, eine Masse zumindest eines Teils der Auflagefläche zu erfassen. Mit anderen Worten kann die Messvorrichtung eine Messung dann durchführen, wenn sie ein Steuersignal aufnimmt. Dadurch kann eine Messung initiiert werden, wenn sichergestellt ist, dass zwischen der ersten Messung und der zweiten Messung kein weiteres Stückgut auf die Auflagefläche aufgebracht und/oder ungewollt entfernt wird. Dieses Steuersignal kann auch automatisiert erzeugt werden, indem die Messvorrichtung mit einem Antrieb oder Steuereinheit in Kommunikation steht, die dafür verantwortlich ist, ob Stückgüter auf die Auflagefläche aufgebracht werden oder nicht. Dadurch kann sichergestellt sein, dass zwischen der ersten Messung der zweiten Messung keine weiteren Stückgüter auf die Auflagefläche aufgebracht werden und somit das Messergebnis verfälschen. Ferner kann eine Messung durch die Messvorrichtung auch dann ausgelöst werden, wenn beispielsweise eine erfolgte Messung ein unrealistisches Ergebnis geliefert hat. Hierbei kann es sich beispielsweise um einen systembedingten Fehler oder einen durch äußere Einflüsse bewirkten Fehler handeln, sodass hier eine erneute Messung durchgeführt werden kann. Somit kann automatisiert versucht werden, eine fehlerhafte Messung zu korrigieren, ohne dass ein manueller Eingriff eines Nutzers notwendig wäre.

Vorzugsweise umfasst die Betriebsinformation einen Zustand des zumindest einen Stückguts auf der Auflagefläche. Mit anderen Worten kann die Betriebsinformation indikativ dafür sein, wie ein Stückgut auf der Auflagefläche aufliegt. Ferner kann die Betriebsinformation indikativ dafür sein, wie viele Stückgüter auf der Auflagefläche aufliegen. So kann beispielsweise der Betriebsinformation angeben, ob ein Haufen von Stückgütern auf der Auflagefläche aufliegen. So kann festgestellt werden, ob der Haufen instabil ist und gegebenenfalls einzelne oder mehrere Stückgüter aus diesem Haufen hinausfallen können. Dadurch kann der Zeitpunkt, an dem eine Massemessung durchgeführt wird, variiert werden. Damit können Fehler aufgrund von Bewegungen in einem Haufen von Stückgütern vermieden werden.

Vorzugsweise kann die Betriebsinformation indikativ dafür sein, ob das zumindest eine Stückgut in Ruhe oder in Bewegung ist. Mit anderen Worten kann damit festgestellt werden, ob derzeit Stückgüter auf die Auflagefläche aufgebracht werden oder ob die Stückgüter auf der Auflagefläche in Ruhe liegen. So kann verhindert werden, dass in einem Zustand, bei dem Stückgüter auf die Auflagefläche aufgebracht werden, eine Massemessung durchgeführt wird. Erst wenn die Stückgüter in Ruhe auf der Auflagefläche aufliegen, kann eine Massemessung durchgeführt werden. Dadurch kann verhindert werden, dass Fehlmessungen durchgeführt werden.

Vorzugsweise umfasst die Betriebsinformation Bildinformationen von dem zumindest einen Stückgut. Mit anderen Worten kann das Stückgut, welches auf der Auflagefläche aufliegt, durch einen Bildsensor aufgenommen werden, um herauszufinden, ob sich das Stückgut in Ruhe oder in Bewegung befindet. Dazu können zumindest zwei Bilder des zumindest einen Stückguts aufgenommen werden und miteinander verglichen werden. Sind die beiden Bilder identisch (d. h. befindet sich das Stückgut in beiden Bildern an derselben Position und/oder in derselben Orientierung), kann davon ausgegangen werden, dass sich das Stückgut in Ruhe befindet und nicht mehr bewegt. In einem solchen Fall kann die Massemessung ausgelöst werden.

Vorzugsweise werden die Bildinformation von einem Sensorsystem, insbesondere der Handhabungsvorrichtung, erlangt. Das Sensorsystem kann oberhalb der Auflagefläche angeordnet sein und Bilddaten von dem zumindest einen Stückgut von vertikal oberhalb der Auflagefläche erstellen. Vorzugsweise kann dazu ein bereits vorhandenes Sensorsystem der Handhabungsvorrichtung verwendet werden. Ein solches Sensorsystem kann beispielsweise als Vision-System realisiert sein. Ein solches System ist üblicherweise notwendig, um die Handhabungsvorrichtung zu steuern. Durch die Verwendung der Bildinformationen durch ein vorhandenes Sensorsystem kann die Vorrichtung besonders einfach implementiert werden, da keine neuen Sensoren notwendig sind, die separat installiert werden müssten. Vielmehr kann auf bereits vorhandene Sensorinformationen zurückgegriffen werden, um festzustellen, in welchem Zustand sich das zumindest eine Stückgut auf der Auflagefläche befindet.

Vorzugsweise werden die Betriebsinformationen durch zumindest eine Lichtschranke erzeugt. Mit anderen Worten können zusätzlich oder alternativ Informationen von Lichtschranken genutzt werden, um herauszufinden, ob die Stückgüter auf der Auflagefläche in Ruhe oder in Bewegung sind. So kann beispielsweise stromaufwärts der Auflagefläche zumindest eine Lichtschranke vorgesehen sein, die detektieren kann, ob weitere Stückgüter der Auflagefläche zugefördert werden oder nicht. Genauso kann zumindest eine Lichtschranke im Bereich der Auflagefläche vorgesehen sein, um zu prüfen, ob weitere Stückgüter der Auflagefläche zugefördert werden oder nicht.

Vorzugsweise kann stromaufwärts der Auflagefläche ein Blockierelement vorgesehen sein, das dazu ausgestaltet ist, den Zufuhrweg von Stückgütern zu der Auflagefläche zu blockieren. Mit anderen Worten kann das Blockierelement, das ausgestaltet sein, zu verhindern, dass Stückgüter der Auflagefläche zugeführt werden. Dazu kann das Blockierelement zwischen einer Freigabeposition und einer Blockierposition hin und her bewegt werden. In der Freigabeposition können Poststücke ungehindert der Auflagefläche zugeführt werden. In der Blockierposition kann das Blockierelement verhindern, dass Stückgüter der Auflagefläche zugeführt werden. So kann sichergestellt sein, dass während eines Messvorgangs der Messvorrichtung das Zuführen weiterer Stückgüter zu der Auflagefläche verhindert ist. Mit anderen Worten kann das Blockierelement während eines Messvorgangs der Messvorrichtung in der Blockierposition sein. Sobald der Messvorgang vorüber ist, kann das Blockierelement in die Freigabeposition überführt werden, damit weitere Stückgüter der Auflagefläche zugeführt werden können. Damit kann auf einfache Art und Weise verhindert werden, dass während eines Messvorgangs Stückgüter ungewollt auf die Auflagefläche aufgebracht werden.

Vorzugsweise ist die Zufuhrfördereinrichtung als Transportband ausgestaltet. Dadurch können Stückgüter gesteuert der Auflagefläche zugefördert werden. Ferner kann das Transportband auch rückwärts angetrieben werden, um beispielsweise Stückgüter von der Auflagefläche weg zu fördern. So kann beispielsweise ein Haufen von Stückgütern separiert werden und/oder Stückgüter, die auf der Zufuhrfördereinrichtung und der Auflagefläche aufliegen, entfernt werden.

Vorzugsweise ist die Messvorrichtung dazu ausgestaltet, eine Messung mit einer Genauigkeit von zumindest plus/minus 100 g durchzuführen. Mit anderen Worten ist es nicht notwendig, auf das Gramm genau festzustellen, wie schwer ein Stückgut ist, sondern es ist ausreichend, dass hier im 100-Grammbereich festgestellt wird, wie schwer ein Stückgut ist. Insbesondere im Postsendungsbereich hat sich herausgestellt, dass diese Genauigkeit ausreichend ist, um eine zufriedenstellende Handhabung der Stückgüter zu realisieren.

Vorzugsweise ist die Handhabungsvorrichtung ein Roboter, insbesondere ein SCARA-Roboter. Der Roboter kann beispielsweise als Roboterarm ausgestaltet sein, der dazu ausgestaltet ist, Stückgüter zu picken und physisch zu bewegen. Beispielsweise kann der Roboterarm ein bestimmtes Stückgut (d.h. das Zielstückgut) anfahren, aufnehmen und an einer gewünschten Position ablegen. Ein SCARA-Roboter kann vier Achsen und vier Freiheitsgrade besitzen. Sämtliche Achsen können als serielle Kinematik ausgeführt sein. Mit anderen Worten kann der Koordinatenursprung der folgenden Achse abhängig von der Position der vorhergehenden Achse sein. Bei einem SCARA-Roboter können die erste und die zweite Achse rotatorischer Natur, die dritte und die vierte Achse aus einem Bauelement hergestellt sein (beispielsweise als Kugelrollspindel), und erlauben eine rotatorische und eine Linearbewegung auszuführen. Ein Greifelement kann an dem unteren Ende in der Z-Achse (d.h. in der Schwererichtung) an der Handhabungsvorrichtung montiert sein.

Vorzugsweise ist die Zufuhrfördereinrichtung dazu ausgebildet, die Stückgüter zumindest anteilig in der Schwererichtung zu fördern. Mit anderen Worten weist die Zufuhrfördereinrichtung zumindest abschnittsweise eine Förderoberfläche auf, auf der Stückgüter durch die Hangabtriebskraft gefördert werden bzw. sich fortbewegen. Damit kann ein passiver Teil der Zufuhrfördereinrichtung gebildet sein, um ein Puffereffekt für Stückgüter zu bewirken. Damit können die Stückgüter zielgerichtet separiert werden.

Vorzugsweise ist die Handhabungsvorrichtung dazu ausgestaltet, das Zielstückgut auf einem von der Auflagefläche beabstandeten Zielbereich abzulegen. Der Zielbereich kann beispielsweise ein weiteres Förderband, ein Sorter, oder eine Endstelle sein. Damit kann die Vorrichtung in vielfältigen Anwendungsbereichen eingesetzt werden.

Vorzugsweise ist die Steuereinheit dazu ausgestaltet, den Zielbereich für das Zielstückgut abhängig von der Masse des Zielstückguts zu bestimmen. Beispielsweise kann die Vorrichtung somit dazu genutzt werden, zu schwere oder zu leichte Stückgüter vor einer bestimmten Handhabung der Stückgüter aus einem Stückgutstrom auszusortieren. Ist beispielsweise ein Stückgut für eine nachfolgende Handhabung zu schwer oder zu leicht, kann dieses Stückgut auf einen anderen Zielbereich aufgebracht werden, wo dasjenige Stückgut dann einer speziellen Behandlung zugeführt wird. Somit kann bei einer späteren Handhabung des Stückguts vermieden werden, dass Stückgüter zu Problemen führen oder dort manuell ausgeschleust werden müssen.

Vorzugsweise ist die Handhabungsvorrichtung dazu ausgestaltet, das Zielstückgut mittels Unterdruck zu handhaben. Mit anderen Worten kann die Handhabungsvorrichtung einen Sauggreifer aufweisen, der mittels Sauggreifvorrichtung das Zielstückgut greifen und aufnehmen kann. Somit kann beispielsweise auch ein benötigter Unterdruck an eine bestimmte Masse des Zielstückguts angepasst werden. Besonders schwere Stückgüter können hierbei einen höheren Unterdruck benötigen, um sicher an der Handhabungsvorrichtung gehalten zu werden, als vergleichsweise leichtere Stückgüter. Dadurch kann der Betrieb der Handhabungsvorrichtung weiter in seiner Effizienz gesteigert werden, da vermieden wird, dass ein unnötig hoher Unterdruck bereitgestellt wird.

Vorzugsweise wird das Zielstückgut anhand von Stückgutinformationen des zumindest einen Stückguts bestimmt. Vorzugsweise können eine Vielzahl von Stückgütern auf der Auflagefläche bereit liegen. Somit muss entschieden werden, welches Stückgut die Handhabungsvorrichtung als nächstes ergreift. Beispielsweise kann das der Handhabungsvorrichtung am nächsten liegende Stückgut als Zielstückgut bestimmt werden. Ferner kann ein Stückgut als das Zielstückgut bestimmt werden, welches eine passende Orientierung aufweist, um von der Handhabungsvorrichtung gehandhabt zu werden. Das Stückgut, welches gehanhabt werden soll, kann als Zielstückgut bezeichnet werden. Dieses Zielstückgut kann anhand von Stückgutinformationen der Vielzahl von Stückgütern, die auf der Auflagefläche bereit liegen, definiert werden. Beispielsweise können die Stückgutinformationen Lageinformationen, Orientierung, äußere physische Eigenschaften oder dergleichen umfassen. Mit anderen Worten kann durch ein Erkennungssystem der Handhabungsvorrichtung bestimmt werden, welches Stückgut als nächstes optimal zu greifen ist. Beispielsweise kann bei Vorliegen eines Haufens von Stückgütern das oberste Stückgut zuerst gegriffen werden, da dadurch verhindert wird, dass der Haufen in sich zusammenfällt und gegebenenfalls Stückgüter von der Auflagefläche hinunterfallen einen Bereich, der nicht mehr von der Handhabungsvorrichtung erreichbar ist.

Gemäß einem weiteren Aspekt der vorliegenden Erfindung wird ein Handhabungssystem zum Handhaben von Stückgütern bereitgestellt. Das Handhabungssystem kann die Vorrichtung gemäß einer der obigen Ausführungsformen umfassen. Das Handhabungssystem kann eine stromabwärts der Vorrichtung befindliche Abfertigungseinheit zur Abfertigung von Stückgütern umfassen. Die Abfertigungseinheit kann basierend auf der durch die Vorrichtung bestimmte Masse des Zielstückgutsgesteuert werden. Die stromabwärts der Vorrichtung befindliche Abfertigungseinheit kann beispielsweise eine Injektion (z.B. eine high-speed-injection) sein, die dazu ausgestaltet ist, Stückgüter auf einen Sorter oder eine andere Fördervorrichtung einzuschießen. Hierbei kann die Information über die Masse des einzuschie-ßenden Stückguts von Bedeutung sein, da damit bestimmt werden kann, wie das jeweilige Stückgut beschleunigt werden kann. Damit kann eine sichere Handhabung des Stückguts in einem stromabwärtigen Prozess sichergestellt sein. Ferner kann die Information einer Masse des Stückguts dazu genutzt werden, um zu verhindern, dass ein besonders schweres Stückgut beispielsweise in einer Endstelle auf andere Stückgüter aufgebracht wird. Dadurch kann verhindert werden, dass die anderen Stückgüter Schaden neben. Ein solches besonders schweres Stückgut kann beispielsweise ausgeschleust oder so behandelt werden, dass es nicht mit anderen Stückgütern in Kontakt kommt.

Gemäß einem Aspekt der vorliegenden Offenbarung wird ein Verfahren zur Handhabung eines Stückguts bereitgestellt. Das Verfahren umfasst ein Zuführen eines Stückguts auf einer als Kaskadenförderer ausgebildeten Zufuhrfördereinrichtung, wobei die Stückgüter so zugeführt werden, dass aus einem 3D Strom zumindest ein 2D Strom generiert wird.

Gemäß einem weiteren Aspekt der vorliegenden Erfindung wird ein Verfahren zur Bestimmung einer Masse eines Zielstückguts bereitgestellt. Das Verfahren umfasst ein Erlangen oder Erfassen eines ersten Massemesswerts eine Auflagefläche, auf der zumindest ein Stückgut aufliegt, und/oder ein Erlangen oder Erfassen eines zweiten Massemesswerts der Auflagefläche. Ferner umfasst das Verfahren ein Handhaben des Zielstückguts, sodass das Zielstückgut von der Auflagefläche entfernt wird. Ferner kann das Verfahren ein Bestimmen einer Masse des Zielstückguts basierend auf dem ersten Massemesswert und/oder dem zweiten Massemesswert umfassen. Das Erlangen des ersten Massemesswerts kann beispielsweise so realisiert sein, dass der erste Massemesswert durch eine externe Vorrichtung bestimmt wird oder aus einer Datenbank zugeführt wird. Das Erfassen kann demgegenüber realisiert sein, indem die Auflagefläche oder zumindest ein Teil der Auflagefläche analysiert wird, um deren Masse zusammen mit dem zumindest einen darauf befindlichen Stückgut zu bestimmen. Damit kann die Masse des Zielstückguts auch nur mit einem einzelnen Massemesswert erlangt werden, wenn beispielsweise nur ein einzelnes Zielstückgut auf der Auflagefläche aufliegt. Dies setzt voraus, dass das Gewicht der Auflagefläche und ggf. weiterer damit verbundener Elemente bekannt ist. Zusätzlich oder alternativ kann die Masse der Auflagefläche und ggf. weiterer damit verbundener Elemente auch durch den zweite Massemesswert angeben sein.

Gemäß einem weiteren Aspekt der vorliegenden Erfindung wird eine Verwendung einer Vorrichtung gemäß einer der obigen Ausführungsformen zum Handhaben von Stückgütern bereitgestellt.

Einzelne Merkmale und Ausführungsformen können mit anderen Merkmalen oder anderen Ausführungsform kombiniert werden und so neue Ausführungsformen bilden. Vorteile und Weiterbildungen, die in Verbindung mit den einzelnen Merkmalen oder den Ausführungsformen genannt sind, gelten dann analog auch für die neuen Ausführungsformen. Vorteile und Ausgestaltungen, die in Verbindung mit der Vorrichtung genannt sind, gelten analog auch für das Verfahren und andersherum.

Im Folgenden wird die vorliegende Erfindung anhand von Ausführungsformen mit Bezug auf die beigefügten Zeichnungen im Detail beschrieben.
- **Fig. 1**: ist eine schematische und perspektivische Ansicht einer Vorrichtung zur Bestimmung einer Masse eines Zielstückguts gemäß einer Ausführungsform der vorliegenden Erfindung.
- **Fig. 2**: ist ein schematisches Ablaufdiagramm eines Verfahrens gemäß einer Ausführungsform der vorliegenden Erfindung.

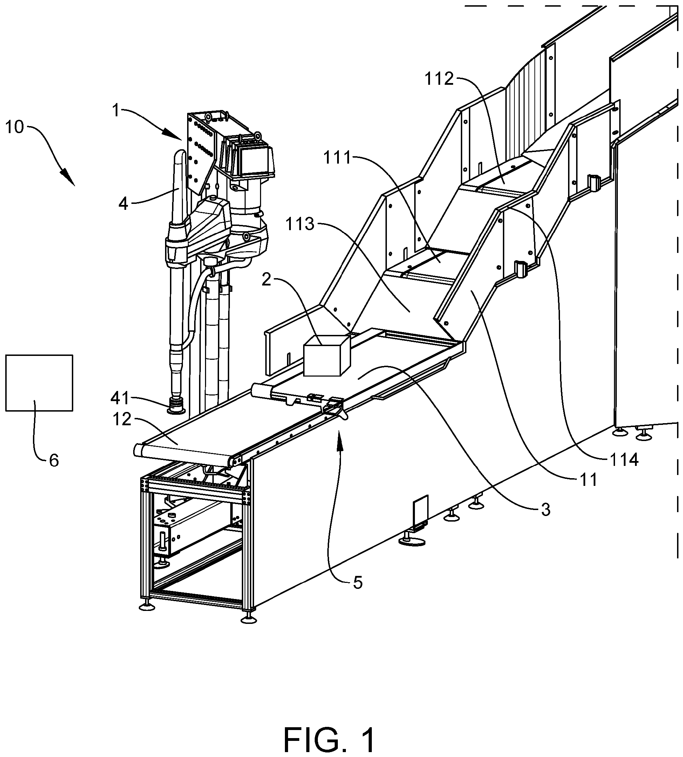

In **Fig.** 1 ist eine Vorrichtung 1 zur Handhabung eines Stückguts 2 perspektivisch und schematisch dargestellt. Genauer gesagt ist in Fig. 1 ein Handhabungssystem 10 dargestellt, welches die Vorrichtung 1 umfasst. Das Handhabungssystem wird weiter unten beschrieben. Die Vorrichtung 1 umfasst eine Auflagefläche 3, die eine Vielzahl von Stückgütern 2 aufnehmen kann. In Fig. 1 ist der Einfachheit halber lediglich ein Stückgut 2 dargestellt. Das Stückgut 2 ist bei der vorliegenden Ausführungsform ein Poststück, welches einer weiteren Verarbeitung zugeführt werden soll (beispielsweise einer Sortierung). Die Vorrichtung 1 weist eine Handhabungsvorrichtung 4 in Form eines Roboterarms auf. Die Handhabungsvorrichtung weist ein Funktionsende 41 auf, mit dem ein Stückgut 2 gehandhabt werden kann. Bei der vorliegenden Ausführungsform handelt es sich bei dem Funktionsende 41, um einen Sauggreifer, der mittels Unterdruck das Stückgut ansaugen kann. Somit kann die Handhabungsvorrichtung 4 das Stückgut 2, welches auf der Auflagefläche 3 aufliegt, so handhaben, dass es von der Auflagefläche 3 einer stromabwärts liegenden Fördereinrichtung 12, die Teil einer übergeordneten Handhabungsvorrichtung ist, zuführen kann. Mit anderen Worten kann die Handhabungsvorrichtung 4 das Stückgut 2 von der Auflagefläche 3 entfernen, sodass das Stückgut 2 nicht mehr auf der Auflagefläche 3 aufliegt. Die Vorrichtung 1 kann gemäß einem Aspekt der vorliegenden Erfindung ein Teil eines Handhabungssystems 10 sein. Das Handhabungssystem kann zudem einen der Vorrichtung 1 vorgelagerten Kaskadenförderer 11 aufweisen. Ferner kann das Handhabungssystem 10 einen der Vorrichtung 10 nachgelagerten Förderer 12 aufweisen. Der Kaskadenförderer 11 kann zumindest zwei unterschiedliche Ebenen aufweisen, auf denen jeweils ein Förderelement 111 und 112 angeordnet ist. Ferner können die verschiedenen Ebenen mit Verbindungsrutschen 113 und 114 verbunden sein. Durch Aktivieren der Fördererelemente 111 und 112 können Stückgüter stückweise weiterbefördert werden. Somit kann der Kaskadenförderer 11 als ein Puffer funktionieren, um zu verhindern, dass in einem kontinuierlichen Stückgutstrom der Auflagefläche 3 kontinuierlich Stückgüter zugeführt werden. Damit kann ein Betrieb der Handhabungsvorrichtung 4 vereinfacht sein, da jedes Stückgut einzeln gegriffen werden kann. Ferner kann durch optional durch das intermittierende Zuführen von Stückgütern 2 zu der Auflagefläche 3 kann sichergestellt sein, dass während der Aufnahme des ersten Massemesswerts und des zweiten Massemesswerts keine zusätzlichen Stückgüter auf die Auflagefläche 3 zugeführt werden. Der stromabwärtige Förderer 12 des Handhabungssystems 10 ist als Förderband ausgestaltet und transportiert die von der Handhabungsvorrichtung 4 gehandhabten Stückgüter weiter zu anderen Handhabungsvorrichtungen.

Ferner weist die Vorrichtung 1 der vorliegenden Ausführungsform eine Messvorrichtung 5 auf, die dazu ausgestaltet ist, eine Masse der Auflagefläche 3 zu bestimmen. Bei der vorliegenden Ausführungsform ist die gesamte Auflagefläche 3 über die Messvorrichtung 5 mit dem Untergrund verbunden. Somit kann, sobald ein Stückgut 2 auf der Auflagefläche 3 aufliegt, die Messvorrichtung 5 die Masse der Auflagefläche 3 zusammen mit den darauf befindlichen Stückgütern 2 bestimmen. Ferner ist die Auflagefläche 3 bei der vorliegenden Ausführungsform als Transportband ausgestaltet. Damit ist die Auflagefläche die Kontaktfläche zwischen dem Stückgut 2 und dem Transportband. Die Messvorrichtung 5 kann Massemesswerte ausgeben. Vorzugsweise ist die Messvorrichtung 5 eine integrierte Waage, die in dem Förderband, welches die Auflagefläche 3 bildet, integriert ist. Zusätzlich oder alternativ kann die Messvorrichtung auch an einem Gestell des Förderbands vorgesehen sein. Beispielsweise kann die Messvorrichtung Messdosen umfassen, die an jedem Fuß des Förderbands vorgesehen sind. Beispielsweise können auch zwei Wiegevorrichtungen in der Messvorrichtung umfasst sein, sodass eine redundante Messung möglich ist. Somit kann bei einem Ausfall eines Messsystems nach wie vor ein Messergebnis erzielt werden. Im Betrieb kann die Messvorrichtung einen Massemesswert der Auflagefläche 3 aufnehmen, wenn das Zielstückguts 2 darauf aufliegt und einen zweiten Massemesswert aufnehmen, wenn das Zielstückgut 2 von der Handhabungsvorrichtung 4 ergriffen ist und von der Auflagefläche entfernt ist. Basierend auf der Differenz kann eine Steuereinheit 6 der Vorrichtung 1 die Differenz beider Massemesswerte bestimmen, und so auf die Masse des Zielstückguts 2 zurückschließen. Damit kann die Masse des Zielstückguts 2 bestimmt werden. Die Bewegung der Handhabungsvorrichtung 4 kann basierend auf der bestimmte Masse angepasst werden. Somit kann die Handhabungsvorrichtung 4 gerade so schnell bewegt werden, dass das Zielstückgut 2 nicht von dem Funktionsende 41 der Handhabungsvorrichtung 4 abfällt.

In dem Fall, bei dem die Auflagefläche 3 als Förderband ausgestaltet ist, kann während der Messung die Stückgüter 2, die sich auf der Auflagefläche 3 befinden, in der Transportrichtung weitertransportiert werden. Dies ist möglich und beeinflusst die Massebestimmung nicht, solange keine weiteren Stückgüter 2 auf die Auflagefläche 3 auftreffen.

In einer weiteren nicht dargestellten Ausführungsform umfasst das Handhabungssystem 10 anstatt des Kaskadenförderers stromaufwärts der Vorrichtung 1 einen separaten Förderer, der intermittierend antreibbar ist. Dadurch kann auch sichergestellt sein, dass der Auflagefläche 3 Stückgüter nur intermittierend zugeführt werden. Somit kann sichergestellt sein, dass während einer Aufnahme der Massemesswerte kein Stückgut auf die Auflagefläche 3 aufgebracht wird.

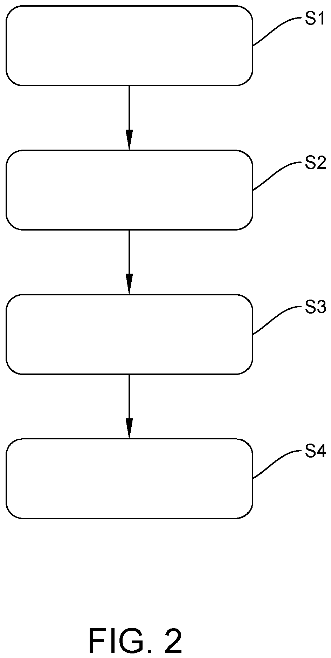

**Fig.** 2 ist ein schematisches Ablaufdiagramm, das ein Verfahren gemäß einer Ausführungsform der vorliegenden Erfindung darstellt. In einem ersten Schritt S1 wird ein erster Massemesswert der Auflagefläche 3, auf der zumindest ein Stückgut 2 aufliegt, erlangt oder erfasst. Erlangt wird der erste Massemesswert, indem er aus einer Datenbank oder aus einer zuvor bestimmten Messung übergeben wird. Erfasst wird der erste Massemesswert dagegen, wenn er selbst durch die Messvorrichtung 5 gemessen wird. In Schritt S2 wird das Zielstückgut 2 von der Ablagefläche 3 entfernt. Dazu kann die Handhabungsvorrichtung 4 das Stückgut aufgreifen, wegschieben oder wegziehen, sodass das Stückgut 2 nicht mehr mit der Auflagefläche 3 in Kontakt ist. In Schritt S3 wird dann der zweite Massemesswert erlangt oder erfasst. Auch hier kann der Massemesswert durch eine Datenleitung aus vorhergehenden Prozessen oder anderen Vorrichtungen erlangt werden oder selbst durch die Messvorrichtung 5 bestimmt werden. Anschließend wird in Schritt S4 die Masse des Zielstückguts 2 basierend auf den Massemesswerten bestimmt. Genauer gesagt wird eine Differenz aus dem ersten Massemesswert und den zweiten Massemesswert gebildet, um die Masse des Zielstückguts zu bestimmen. Damit kann die Masse des Zielstückguts ohne Probleme bestimmt werden.

### Bezugszeichenliste:

- 1: Vorrichtung
- 2: Zielstückgut
- 3: Auflagefläche
- 4: Handhabungsvorrichtung
- 5: Messvorrichtung
- 6: Steuereinheit
- 10: Handhabungssystem
- 11: Kaskadenförderer
- 12: Förderband
- 111: Förderelement
- 112: Förderelement
- 113: Rutschelement
- 114: Rutschelement

## Patentansprüche

1. Vorrichtung (1) zur Handhabung eines Stückguts (2), umfassend
eine Auflagefläche (3), die so ausgestaltet ist, dass zumindest ein Stückgut (2) darauf aufliegen kann,
eine Handhabungsvorrichtung (4), die dazu ausgestaltet ist, ein Stückguts (2), welches auf der Auflagefläche (3) aufliegt, so zu handhaben, dass das Stückgut (2) von der Auflagefläche (3) entfernt wird, und
eine Zufuhrförderereinrichtung, die dazu ausgestaltet ist, zumindest ein Stückgut der Auflagefläche (3) zuzufördern,
wobei die Zufuhrfördereinrichtung als ein Kaskadenförderer (11) ausgestaltet ist.

2. Vorrichtung (1) gemäß einem der vorhergehenden Ansprüche, wobei die Zu-fuhrfördereinrichtung unterschiedliche Ebenen aufweisen, auf denen jeweils ein Förderelement (111, 112) vorgesehen ist.

3. Vorrichtung (1) gemäß Anspruch 2, wobei zumindest zwei Ebenen mit einander durch eine schräge und rutschenartige Verbindung verbunden sind.

4. Vorrichtung (1) gemäß Anspruch 2 oder 3, wobei durch Antreiben des Förderelements (111, 112) auf der jeweiligen Ebene des Kaskadenförderers Stückgüter weiter in Transportrichtung gefördert werden können, sodass diese die Verbindung zur nächsten Ebene hinunterrutschen.

5. Vorrichtung (1) gemäß einem der Ansprüche 2 bis 4, wobei zumindest eines der Förderelemente (111, 112) dazu ausgestaltet ist, intermittierend angetrieben zu werden.

6. Vorrichtung (1) gemäß einem der vorhergehenden Ansprüche, wobei der Kaskadenförderer (11) seitlich Leitwände aufweist, sodass verhindert ist, dass Stückgüter von dem Kaskadenförderer (11) seitlich herunterfallen.

7. Vorrichtung (1) gemäß einem der vorhergehenden Ansprüche, wobei die Zufuhrfördereinrichtung dazu ausgestaltet ist, Stückgüter zwischenzupuffern.

8. Vorrichtung (1) gemäß einem der vorhergehenden Ansprüche, wobei die Zufuhrfördereinrichtung dazu ausgestaltet ist, einen 2D-Strom oder einen 1D-Strom zu erzeugen.

9. Vorrichtung (1) gemäß einem der vorhergehenden Ansprüche, umfassend:
eine Messvorrichtung (5), die dazu ausgestaltet ist, eine Masse zumindest eines Teils der Auflagefläche (3) zu erfassen, auf der das zumindest eine Stückgut (2) aufliegt und einen Massemesswert auszugeben, und
eine Steuereinheit (6), die dazu ausgestaltet ist, basierend auf einem ersten Massemesswert und/oder einem zweiten Massemesswert die Masse des Stückgut (2) zu bestimmen,
wobei der erste Massemesswert die Masse zumindest eines Teils der Auflagefläche (3) und des Stückguts (2) umfasst, und
wobei der zweite Massemesswert die Masse zumindest eines Teils der Auflagefläche (3) ohne die Masse des Stückguts (2) umfasst.

10. Vorrichtung (1) gemäß Anspruch 9, wobei die Steuereinheit (6) dazu ausgestaltet ist, die Handhabungsvorrichtung (4) basierend auf der Masse des Stückguts (2) zu steuern.

11. Vorrichtung (1) gemäß Anspruch 9 oder 10, wobei die Messvorrichtung (5) dazu ausgestaltet ist, basierend auf einer Betriebsinformation der Vorrichtung (1) eine Masse zumindest eines Teils der Auflagefläche (3) zu erfassen.

12. Vorrichtung (1) gemäß einem der vorhergehenden Ansprüche, wobei die Handhabungsvorrichtung (4) ein Roboter, insbesondere ein SCARA-Roboter, ist.

13. Vorrichtung (1) gemäß einem der vorhergehenden Ansprüche, wobei die Zufuhrfördereinrichtung dazu ausgebildet ist, die Stückgüter zumindest anteilig in der Schwererichtung zu fördern.

14. Handhabungssystems (10) zum Handhaben von Stückgütern (2), umfassend
die Vorrichtung (1) gemäß einem der vorhergehenden Ansprüche, und
eine stromabwärts der Vorrichtung (1) befindliche Abfertigungseinheit zur Abfertigung von Stückgütern (2).

15. Verfahren zur Handhabung eines Stückguts (2), umfassend:
Zuführen eines Stückguts (2) auf einer als Kaskadenförderer (11) ausgebildeten Zufuhrfördereinrichtung,
wobei die Stückgüter so zugeführt werden, dass aus einem 3D Strom zumindest ein 2D Strom generiert wird.
